# EUROPÄISCHE PATENTANMELDUNG

(11) **EP 0 870 672 A1**
(43) Veröffentlichungstag der Anmeldung: **14.10.1998**
(21) Anmeldenummer: 98102573.7
(22) Anmeldetag: 14.02.1998
(51) Int. Cl.: B62K 3/00, B62K 25/28

(54) **Fahrrad**

(30) Priorität: 08.04.1997 DE 19715457; 28.05.1997 DE 19722344; 31.10.1997 DE 19748101; 31.10.1997 DE 19750256; 03.12.1997 DE 19753569
(71) Anmelder: Hein, Johann, 30826 Garbsen (DE)
(72) Erfinder: Hein, Johann, 30826 Garbsen (DE)
(74) Vertreter: König, Norbert, Dipl.-Phys. Dr.

(57) **Zusammenfassung**

Ein Fahrrad (2) weist einen Rahmen (4) auf, der eine vordere Rahmenanordnung (6), an der ein Vorderrad (18) angeordnet ist, und eine hintere Rahmenanordnung (8), an der wenigstens ein Hinterrad (46) angeordnet ist, aufweist. An dem Rahmen (4) ist eine Tretlageranordnung (30) angeordnet. Bei dem erfindungsgemäßen Fahrrad befindet sich die Drehachse der Tretlageranordnung (30) näher an der Drehachse des Vorderrades (18) als an der Drehachse des Hinterrades (46). Auf diese Weise ist der Kraftangriffspunkt an den Pedalen des Fahrrades, die an der Tretlageranordnung gelagert sind, in Längsrichtung des Fahrrades nach vorne verlagert. Auf diese Weise ist eine ergonomisch günstige Sitzposition für den Fahrer des Fahrrades 2 erzielt und die Kraftausnutzung beim Fahren des Fahrrades 2 verbessert und das Fahren ermüdungsfreier gestaltet.

## Beschreibung

Die Erfindung betrifft ein Fahrrad der im Oberbegriff des Anspruchs 1 genannten Art.

Derartige Fahrräder sind allgemein bekannt. Sie weisen einen Rahmen, der eine vordere Rahmenanordnung, an der ein Vorderrad angeordnet ist, und eine hintere Rahmenanordnung, an der wenigstens ein Hinterrad angeordnet ist, auf. Ferner weisen die bekannten Fahrräder eine an dem Rahmen angeordnete Tretlageranordnung auf. In der Tretlageranordnung sind Tretkurbeln mit Pedalen um eine Drehachse drehbar gelagert, wobei die Tretkurbeln über eine Welle mit einem vorderen Kettenrad drehfest verbunden sind, das über eine Antriebskette und wenigstens ein mit der Drehachse des Hinterrades des Fahrrades drehfest verbundenes Kettenrad als Antriebsvorrichtung des Fahrrades dient.

Die bekannten Fahrräder sind einfach und kostengünstig herstellbar und robust im Aufbau.

Ein Nachteil der bekannten Fahrräder besteht jedoch darin, daß die Sitzposition des Fahrers auf der Sitzeinrichtung des Fahrrades häufig unbequem und in ergonomischer Hinsicht ungünstig ist, weil der Fahrer nach vorne übergebeugt auf dem Sattel sitzt. Da hierbei der Rücken des Fahrers gekrümmt ist, treten insbesondere bei längeren Fahrten häufig starke Belastungen der Rückenmuskulatur, der Wirbelsäule und insbesondere der Bandscheiben auf, die zu Rückenbeschwerden bis hin zu Rückenschäden führen können.

Der vorliegenden Erfindung liet die Aufgabe zugrunde, ein Fahrrad der betreffenden Art anzugeben, das die Nachteile der bekannten Fahrräder nicht aufweist, bei dem also die Sitzposition des Fahrers auf dem Fahrrad verbessert und bei dem das Fahren ermüdungsfreier gestaltet ist.

Diese Aufgabe wird durch die im Anspruch 1 angegebene Lehre gelöst.

Erfindungsgemäß ist der Kraftangriffspunkt an den Pedalen, der sich bei den bekannten Fahrrädern in Längsrichtung des Fahrrades gesehen etwa unterhalb des Sattels befindet, in Längsrichtung nach vorne verlagert. Auf diese Weise ist eine ergonomisch günstigere Sitzposition erreicht, bei der die Beine des Fahrers bei der Tretbewegung nicht im wesentlichen nach unten, sondern nach schräg vorne durchgestreckt werden. Außerdem ist die Kraftausnutzung beim Treten verbessert und das Fahren ermüdungsfreier gestaltet.

Rahmenform und -größe des erfindungsgemäßen Fahrrades sind in weiten Grenzen wählbar. Das erfindungsgemäße Fahrrad kann als Zweirad oder als Dreirad mit zwei Hinterrädern ausgebildet sein.

Das erfindungsgemäße Fahrrad kann ohne Gangschaltung oder in dem Fachmann bekannter Weise als Fahrrad mit Nabenschaltung und/oder Kettenschaltung ausgebildet sein.

Eine besonders vorteilhafte Weiterbildung der erfindungsgemäßen Lehre sieht vor, daß die Tretlageranordnung relativ zu einer mit dem Rahmen verbundenen Sitzeinrichtung des Fahrrades derart angeordnet ist, daß ein von dem Verbindungspunkt der Sitzeinrichtung mit dem Rahmen zu der Drehachse der Tretlageranordnung verlaufende gedachte Linie mit der Horizontalen einen Winkel von etwa 35 bis etwa 55°, vorzugsweise etwa 42° bis etwa 48°, insbesondere etwa 45°, bildet. Auf diese Weise ist eine Sitzposition des Fahrers auf dem Fahrrad erzielt, die sowohl in ergonomischer Hinsicht als auch hinsichtlich einer möglichst guten Kraftausnutzung beim Treten besonders günstig ist. Auf diese Weise ist das Fahren des erfindungsgemäßen Fahrrades rückenschonend, ermüdungsfrei und kraftsparend gestaltet.

Eine andere Weiterbildung der erfindungsgemäßen Lehre sieht vor, daß die vordere Rahmenanordnung einen Lenkkopf, in dem eine Lenkeranordnung gelagert ist, die mit einem Vorderradgabelteil zur Aufnahme des Vorderrades verbunden ist, und eine Oberstange, die mit dem Lenkkopf oder einer Unterstange und über eine Rahmenstrebe mit einem Hinterradgabelteil der hinteren Rahmenanordnung zur Aufnahme des Hinterrades verbunden ist, aufweist, daß die Tretlageranordnung über die Unterstange mit dem Lenkkopf verbunden ist, daß die Unterstange oder die Tretlageranordnung über eine Zwischenstrebe mit der Rahmenstrebe verbunden ist und daß die Tretlageranordnung im Bereich des der Unterstange zugewandten Endes der Zwischenstrebe angeordnet ist. Diese Ausführungsform ist robust und stabil im Aufbau. Die Verlagerung der Drehachse der Tretlageranordnung hin zu der Drehachse des Vorderrades ist dadurch erzielt, daß die Tretlageranordnung im Bereich des der Unterstange zugewandten Endes der Zwischenstrebe angeordnet ist.

Die Zwischenstrebe kann bei der vorgenannten Ausführungsform als separates Teil, beispielsweise als separate Stange, ausgebildet sein, die beispielsweise im Bereich ihres der Unterstange zugewandten Endes mit der Unterstange bzw. der Tretlageranordnung und im Bereich ihres der Unterstange abgewandten Endes mit der Rahmenstrebe und/oder dem Hinterradgabelteil verschweißt sein kann. Eine Weiterbildung der erfindungsgemäßen Lehre sieht jedoch vor, daß die Zwischenstrebe mit der Rahmenstrebe und/oder der Unterstange einstückig ausgebildet ist. Auf diese Weise ist die Herstellung des erfindungsgemäßen Fahrrades vereinfacht und damit kostengünstiger gestaltet, und die Robustheit ist verbessert. Beispielweise kann bei einstückiger Ausbildung von Rahmenstrebe und Zwischenstrebe eine Rahmen- und Zwischenstrebe bildende Stange einen ersten, von der Oberstange zum Hinterradgabelteil verlaufenden, die Rahmenstrebe bildenden Bereich aufweisen, der im Bereich des Hinterradgabelteiles in einen zweiten, die Zwischenstrebe bildenden Bereich übergeht.

Die vordere Rahmenanordnung kann mit der hinteren Rahmenanordnung fest verbunden, beispielsweise verschweißt sein. Eine besonders vorteilhafte Weiterbildung der erfindungsgemäßen Lehre sieht jedoch vor, daß die vordere Rahmenanordnung um eine zu den Drehachsen von Vorder- und Hinterrad parallele Schwenkachse schwenkbar mit der hinteren Rahmenanordnung verbunden ist und daß zwischen der vorderen Rahmenanordnung und der hinteren Rahmenanordung entfernt von der Schwenkachse Feder- und/oder Stoßdämpfungsmittel angeordnet sind. Bei dieser Ausführungsform führen die vordere Rahmenanordnung und die hintere Rahmenanordnung beim Fahren relativ zueinander leichte Schwenkbewegungen aus, die durch die Federmittel abgefedert und/oder durch die Stoßdämpfungsmittel gedämpft werden. Hierdurch entstehen leichte Vibrationen, die über den Sattel bzw. Sitz in den Rückenbereich des Fahrers eingeleitet werden. Hierdurch werden beim Fahren eventuell auftretende Fehlstellungen der Wirbel korrigiert, die Muskulatur entlastet und massiert und die Durchblutung, insbesondere im Bereich der Bandscheibe und der Wirbel, verbessert. Auf diese Weise wird Rückenbeschwerden vorgebeugt, oder bereits bestehende Rückenbeschwerden werden gelindert.

Zweckmäßigerweise weist die hintere Rahmenanordnung zwei seitliche Hinterradstreben auf, deren eines Ende jeweils mit dem Hinterradgabelteil und deren anderes Ende jeweils mit einem Ende einer Verbindungsstrebe verbunden ist, deren anderes Ende mit dem Hinterradgabelteil verbunden ist. Auf diese Weise ist ein besonders robuster und stabiler Aufbau der hinteren Rahmenanordnung erzielt.

Eine vorteilhafte Weiterbildung der vorgenannten Ausführungsform sieht vor, daß zur schwenkbaren Verbindung von vorderer Rahmenanordnung und hinterer Rahmenanordnung das Hinterradgabelteil oder ein damit verbundenes Teil über ein Schwenklager mit der vorderen Rahmenanordnung, vorzugsweise mit der Rahmenstrebe oder der Zwischenstrebe, schwenkbar verbunden ist. Diese Ausführungsform ist einfach und kostengünstig herstellbar und robust im Aufbau.

Grundsätzlich kann sich die Schwenkachse des Schwenklagers relativ zu einer Verbindungslinie zwischen der Drehachse des Tretlagers der Tretlageranordnung und der Drehachse des Hinterrades an einer beliebigen Stelle befinden. Bei Schwenkbewegungen der vorderen und der hinteren Rahmenanordnung relativ zueinander auftretende Änderungen der Spannung der Antriebskette können dann beispielsweise durch einen bei einer Kettenschaltung vorhandenen Kettenspanner ausgeglichen werden. Zweckmäßigerweise befindet sich die Schwenkachse des Schwenklagers jedoch bei Betrieb des Fahrrades, d. h. bei Belastung des Fahrrades mit dem Gewicht des Fahrers, auf einer Verbindungslinie zwischen der Drehachse des Tretlagers und der Drehachse des Hinterrades. Auf diese Weise sind Änderungen in der Spannung der Kette vermieden, so daß ein Kettenspanner nicht erforderlich ist und die erfindungsgemäß vorgesehene schwenkbare Verbindung von vorderer und hinterer Rahmenanordnung auch bei Fahrrädern ohne Gangschaltung oder mit Nabenschaltung anwendbar ist. Um zu erreichen, daß sich die Schwenkachse bei Betrieb des Fahrrades auf der Verbindungslinie zwischen der Drehachse des Tretlagers und der Drehachse des Hinterrades befindet, wird der Fachmann die Federmittel ggf. so bemessen, daß bei Belastung des Fahrrades mit dem Gewicht des Fahrers ein Federweg eintritt, der so bemessen ist, daß sich am Ende des Federweges die Schwenkachse des Schwenklagers auf der Verbindungslinie zwischen der Drehachse des Tretlagers und der Drehachse des Hinterrades befindet.

Die Stoßdämpfungsmittel sind in dem Fachmann bekannter Weise so bemessen, daß entsprechend den jeweiligen Anforderungen eine gewünschte Stoßdämpfungswirkung erzielt ist. Form und Größe der Stoßdämpfungsmittel sind in weiten Grenzen wählbar. Zweckmäßigerweise weisen die Stoßdämpfungsmittel jedoch wenigstens einen Stoßdämpfer auf, dessen eines Ende gelenkig mit der vorderen Rahmenanordnung und dessen anderes Ende gelenkig mit der hinteren Rahmenanordnung verbunden ist.

Auch die Federmittel sind in dem Fachmann bekannter Weise so bemessen, daß entsprechend den jeweiligen Anforderungen eine gewünschte Federwirkung erzielt ist. Form, Größe und Ausbildung der Federmittel sind in weiten Grenzen wählbar. Zweckmäßigerweise weisen die Federmittel jedoch wenigstens eine Druckfeder, insbesondere eine Schraubenfeder auf.

Zweckmäßigerweise ist die Tretlageranordnung in Längsrichtung des Fahrrades etwa unterhalb der Lenkeranordnung angeordnet.

Grundsätzlich ist es ausreichend, wenn das erfindungsgemäße Fahrrad in bekannter Weise einen Sattel als Sitzeinrichtung aufweist. Eine besonders vorteilhafte Weiterbildung der erfindungsgemäßen Lehre sieht jedoch vor, daß die Sitzeinrichtung des Fahrrades einen mit dem Rahmen verbundenen Sitz mit einer Rückenlehne aufweist. Auf diese Weise kann sich der Fahrer beim Treten an der Rückenlehne abstützen, wodurch die Tretbewegung erleichtert und die Kraftausnutzung verbessert ist. Durch die Abstützung des Rückens ist selbst bei längeren Fahrten die Gefahr verringert, daß beim Fahrer Rückenprobleme auftreten.

Eine vorteilhafte Weiterbildung der Ausführungsform mit dem Sitz sieht vor, daß der Sitz in Längsrichtung des Fahrrades und/oder in seiner Höhe und/oder seiner Neigung und/oder die Rückenlehne des Sitzes in ihrer Neigung und/oder ihrer Höhe verstellbar und in der jeweiligen Verstellage arretierbar ist. Auf diese Weise läßt sich die Sitzposition des Fahrers in weiten Grenzen anpassen und so einstellen, daß in ergonomischer Hinsicht eine besonders günstige Sitzposition erzielt ist.

Zweckmäßigerweise weist die Lenkeranordnung eine Lenkstange zum Lenken des Fahrrades auf, deren freie Enden sich in Längsrichtung des Fahrrades etwa bis in den Bereich der Zwischenstrebe erstrecken. Bei dieser Ausführungsform erstreckt sich die Lenkstange weit zum Fahrer hin, so daß sich dieser beim Fahren nicht nach vorne zu beugen braucht, sondern vielmehr aufrecht auf dem Fahrrad sitzt. Auf diese Weise ist die Sitzposition in ergonomischer Hinsicht noch weiter verbessert.

Die Oberstange kann beispielsweise von dem Lenkkopf zur Rahmenstrebe gerade verlaufen. Eine zweckmäßige Weiterbildung der erfindungsgemäßen Lehre sieht jedoch vor, daß die Oberstange zwischen ihren Enden nach unten hin gebogen oder abgewinkelt ist. Auf diese Weise ist, ähnlich wie bei bekannten Damenfahrrädern, das Aufsteigen auf das Fahrrad bzw. das Absteigen von dem Fahrrad erleichtert.

Vorder- und Hinterrad können bei dem erfindungsgemäßen Fahrrad den gleichen Durchmesser aufweisen, beispielsweise einen Durchmesser von 24 Zoll. Eine vorteilhafte Weiterbildung der erfindungsgemäßen Lehre sieht jedoch vor, daß der Durchmesser des Vorderrades kleiner ist als der Durchmesser des Hinterrades. Bei dieser Ausführungsform ist ein besonders kompakter Aufbau des Fahrrades erzielt. Beispielsweise kann das Vorderrad einen Durchmesser von 24 Zoll und das Hinterrad einen Durchmesser von 28 Zoll aufweisen.

Form und Länge der Zwischenstrebe sind in weiten Grenzen wahlbar. Zweckmäßigerweise erstreckt sich die Zwischenstrebe jedoch im wesentlichen in Richtung des Hinterradgabelteiles.

Gemäß einer anderen Weiterbildung der erfindungsgemäßen Lehre ist der Sitz mit der Rückenlehne einstückig ausgebildet. Bei dieser Ausführungsform können Sitz und Rückenlehne beispielsweise durch einen orthopädischen Schalensitz gebildet sein.

Form und Größe des Sitzes der Rückenlehne sind in weiten Grenzen wählbar. Eine besonders vorteilhafte Weiterbildung der Ausführungsform mit dem Sitz und der Rückenlehne sieht vor, daß die Rückenlehne eine breite Stützfläche zur großflächigen Abstützung des Rückens des Fahrers bildet. Durch die großflächige Abstützung ist die Bequemlichkeit für den Fahrer erhöht und der bei der Tretbewegung zum Fahren des Fahrrades erforderliche Kraftaufwand verringert.

Die Breite des Sitzes ist in weiten Grenzen wählbar. Eine vorteilhafte Weiterbildung der erfindungsgemäßen Lehre sieht jedoch vor, daß die Breite des Sitzes wenigstens im Bereich seines der Rückenlehne zugewandten Endes im wesentlichen der Breite dieses Endes der Rückenlehne enspricht. Bei dieser Ausführungsform bildet der Sitz eine breite Sitzfläche, so daß die Sitzposition des Fahrers weiter verbessert und die Bequemlichkeit weiter erhöht ist.

Eine andere Ausführungsform der erfindungsgemäßen Lehre sieht vor, daß die Oberstange über eine Verbindungsstrebe mit der Unterstange und/oder der Zwischenstrebe verbunden ist.

Die Erfindung wird nachfolgend anhand der beigefügten Zeichnung, in der Ausführungsbeispiele dargestellt sind, näher erläutert.

Es zeigt:
Fig. 1 in schematischer Seitenansicht ein erstes Ausführungsbeispiel des erfindungsgemäßen Fahrrades,
Fig. 2 in gleicher Darstellung wie Fig. 1 ein zweites Ausführungsbeispiel des erfindungsgemäßen Fahrrades,
Fig. 3 in gleicher Darstellung wie Fig. 1 ein drittes Ausführungsbeispiel des erfindungsgemäßen Fahrrades,
Fig. 4 in schematischer Seitenansicht Bauteile eines ersten Ausführungsbeispiels eines Sitzes,
Fig. 5 in gleicher Darstellung wie Fig. 4 ein zweites Ausführungsbeispiel eines Sitzes,
Fig. 6 in schematischer Seitenansicht Bauteile der Feder- und Stoßdämpfungsmittel des Fahrrades gemäß Fig. 1,
Fig. 7 in schematischer Seitenansicht Bauteile des Schwenklagers zur schwenkbaren Verbindung von vorderer und hinterer Rahmenanordnung des Fahrrades gemäß Fig. 1,
Fig. 8 in gleicher Darstellung wie Fig. 1 ein viertes Ausführungsbeispiel des erfindungsgemäßen Fahrrades,
Fig. 9 in gleicher Darstellung wie Fig. 1 ein fünftes Ausführungsbeispiel des erfindungsgemäßen Fahrrades,
Fig. 10 in gleicher Darstellung wie Fig. 1 ein sechstes Ausführungsbeispiel des erfindungsgemäßen Fahrrades,
Fig. 11 in gleicher Darstellung wie Fig. 1 ein siebtes Ausführungsbeispiel des erfindungsgemäßen Fahrrades,
Fig. 12 in gleicher Darstellung wie Fig. 1 ein achtes Ausführungsbeispiel des erfindungsgemäßen Fahrrades,
Fig. 13 in gleicher Darstellung wie Fig. 1 ein neuntes Ausführungsbeispiel des erfindungsgemäßen Fahrrades,
Fig. 14 in gleicher Darstellung wie Fig. 1 ein zehntes Ausführungsbeispiel des erfindungsgemäßen Fahrrades und
Fig. 15 in gleicher Darstellung wie Fig. 1 ein elftes Ausführungsbeispiel des erfindungsgemäßen Fahrrades.

Gleiche oder entsprechende Bauteile sind in den Figuren der Zeichnungen mit den gleichen Bezugszeichen versehen.

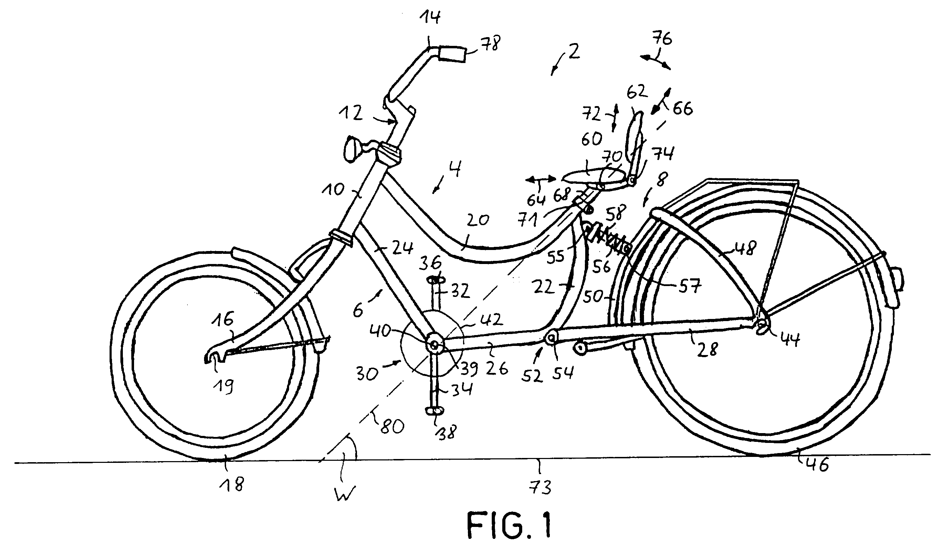

In Fig. 1 ist ein Fahrrad 2 mit einem Rahmen 4 dargestellt, der eine vordere Rahmenanordnung 6 und eine hintere Rahmenanordnung 8 aufweist. Die vordere Rahmenanordnung 6 weist einen Lenkkopf 10 auf, in dem eine Lenkeranordnung 12 gelagert ist, die eine Lenkstange 14 aufweist und mit einem Vorderradgabelteil 16 zur Aufnahme eines Vorderrades 18 mit einer Drehachse 19 verbunden ist.

Die vordere Rahmenanordnung 6 weist ferner eine Oberstange 20 auf, die bei diesem Ausführungsbeispiel zwischen ihren Enden nach unten hin gebogen ist. Die Oberstange 20 ist mit ihrem einen Ende mit dem Lenkkopf 10 und mit ihrem anderen Ende mit einer Rahmenstrebe 22 verbunden. Ferner weist die vordere Rahmenanordnung 6 eine Unterstange 24 auf, deren eines Ende mit dem Lenkkopf 10 und deren anderes Ende über eine Zwischenstrebe 26 mit der Rahmenstrebe 22 verbunden ist. Bei diesem Ausführungsbeispiel sind die Rahmenstrebe 22 und die Zwischenstrebe 26 durch eine gemeinsame Stange gebildet, die einen ersten, von der Oberstange 20 gebogen nach unten verlaufenden, die Rahmenstrebe 22 bildenden Bereich und einen sich daran anschließenden, sich im wesentlichen in Richtung eines Hinterradgabelteiles 28 erstreckenden, die Zwischenstrebe 26 bildenden Bereich aufweist.

Im Bereich des der Unterstange 24 zugewandten Endes der Zwischenstrebe 26 ist eine Tretlageranordnung 30 angeordnet, an der Tretkurbeln 32, 34 mit Pedalen 36, 38 mit einer an einem Tretlager 39 drehbar gelagerten Welle 40 verbunden sind, die mit einem vorderen Kettenrad 42 drehfest verbunden ist. Die Tretlageranordnung 30 mit den Tretkurbeln 32, 34, den Pedalen 36, 38 und dem vorderen Kettenrad 42 bildet zusammen mit einer in Fig. 1 nicht dargestellten Antriebskette und einem in Fig. 1 nicht dargestellten hinteren Kettenrad, das mit einer Drehachse 44 eines Hinterrades 46 drehfest verbunden ist, eine Antriebsvorrichtung des Fahrrades 2.

Die hintere Rahmenanordnung 8 des Rahmens 4 weist neben dem Hinterradgabelteil 28 zur Aufnahme des Hinterrades 46 bei diesem Ausführungsbeispiel zwei seitliche Hinterradstreben auf, von denen in Fig. 1 nur eine Hinterradstrebe sichtbar und mit dem Bezugszeichen 48 bezeichnet ist. Das eine Ende der Hinterradstreben 48 ist im Bereich der Drehachse 44 des Hinterrades 46 mit dem Hinterradgabelteil 28 und das andere Ende jeweils mit einem Ende einer Verbindungsstrebe 50 verbunden. Das andere Ende der Verbindungsstrebe 50 ist mit dem Hinterradgabelteil 28 verbunden.

Bei dem Ausführungsbeispiel gemäß Fig. 1 ist die vordere Rahmenanordnung 6 mit der hinteren Rahmenanordnung 8 an einem Schwenklager 52 um eine zu den Drehachsen 19, 44 von Vorderrad 18 und Hinterrad 46 parallele Schwenkachse 54 schwenkbar verbunden. Zwischen der vorderen Rahmenanordnung 6 und der hinteren Rahmenanordnung 8 sind entfernt von der Schwenkachse 54 Feder- und Stoßdämpfungsmittel angeordnet, die weiter unten näher erläutert werden.

Die Stoßdämpfungsmittel sind bei diesem Ausführungsbeispiel durch einen Stoßdämpfer 56 gebildet, dessen eines Ende um eine Achse 55 gelenkig mit der Rahmenstrebe 22 der vorderen Rahmenanordnung 6 und dessen anderes Ende um eine Achse 57 gelenkig mit der Verbindungsstrebe 50 der hinteren Rahmenanordnung 8 verbunden ist.

Die Federmittel sind bei diesem Ausführungsbeispiel durch eine zu dem Stoßdämpfer 56 koaxiale Druckfeder in Form einer Schraubenfeder 58 gebildet, die sich über Federsättel, die weiter unten näher erläutert werden, mit einem Ende an der vorderen Rahmenanordnung 6 und mit dem anderen Ende an der hinteren Rahmenanordnung 8 abstützt.

Das Fahrrad 2 weist ferner als Sitzeinrichtung für den Fahrer einen Sitz 60 mit einer Rückenlehne 62 auf. Der Sitz 60 ist in Längsrichtung des Fahrrades 2 verstellbar, wie dies durch einen Pfeil 64 angedeutet ist, und in seiner Höhe verstellbar, wie dies durch einen Pfeil 66 angedeutet ist. Der Sitz 60 ist mit einer Stange 68 verschieblich in der Oberstange 20 gehalten, so daß durch Verschieben der Stange 68 in der Oberstange 20 der Sitz 60 in seiner Höhe verstellbar ist. Der Sitz 60 ist zur Neigungsverstellung um eine Achse 70 relativ zu der Stange 68 verstellbar. In seiner jeweiligen Verstellage ist der Sitz 60 arretierbar.

Aus Fig. 1 ist ersichtlich, daß die Tretlageranordnung 30 relativ zu der mit dem Rahmen 4 verbundenen, durch den Sitz 60 mit Rückenlehne 62 gebildeten Sitzeinrichtung des Fahrrades 2 derart angeordnet ist, daß eine von dem Verbindungspunkt 71 bzw. der Verbindungsstelle der Sitzeinrichtung mit dem Rahmen 4, bei dem Ausführungsbeispiel gemäß Fig. 1 also von dem Punkt bzw. der Stelle, an dem bzw. an der der Sitz 60 mit der Stange 68 in der Oberstange 20 gehalten ist, zu der Drehachse 40 der Tretlageranordnung 30 verlaufende gedachte Linie 80 mit der Horizontalen 73 einen Winkel W von etwa 45° bildet. Auf diese Weise sind sowohl im Hinblick auf eine günstige Sitzposition des Fahrers als auch im Hinblick auf eine möglichst gute Kraftausnutzung besonders günstige Verhältnisse geschaffen.

Aus Fig. 1 ist ersichtlich, daß die gedachte Linie 80, die zwischen der Drehachse 30 und dem Verbindungspunkt 71 verläuft, durch die Rückenlehne 62 verläuft. Auf diese Weise ist sichergestellt, daß sich der Fahrer bei der Tretbewegung mit seinem Rücken an der Rückenlehne 62 abstützen kann. Dies ermöglicht eine besonders gute Kraftausnutzung bei der Tretbewegung.

Die Rückenlehne 62 ist in ihrer Höhe verstellbar, wie dies durch einen Pfeil 72 angedeutet ist, und in ihrer Neigung relativ zu dem Sitz 60 um eine Achse 74 verstellbar, wie dies durch einen Pfeil 76 angedeutet ist, und in ihrer jeweiligen Verstellage arretierbar.

Aus Fig. 1 ist ersichtlich, daß der Durchmesser des Vorderrades 18 kleiner als der Durchmesser des Hinterrades 46 ist. Ferner ist aus Fig. 1 ersichtlich, daß die Tretlageranordnung 30 in Längsrichtung des Fahrrades 2 etwa unterhalb der Lenkeranordnung 12 angeordnet ist und daß sich die Lenkstange 14 mit ihren freien Enden 78 in Längsrichtung des Fahrrades 2 bis in den Bereich der Zwischenstrebe 26 erstreckt.

Die Funktionsweise des erfindungsgemäßen Fahrrades 2 ist wie folgt:

Vor Fahrtantritt stellt der Fahrer des Fahrrades 2 ggf. den Sitz 60 hinsichtlich Höhe, Neigung und Position in Längsrichtung des Fahrrades 2 sowie die Rückenlehne 62 hinsichtlich Höhe und Neigung entsprechend seiner Körpergröße ein. Dadurch, daß sich die Lenkstange 14 mit ihren freien Enden 78 zum Fahrer hin erstreckt, sitzt der Fahrer beim Fahren aufrecht auf dem Sitz 60, wobei sein Rückenbereich durch die Rückenlehne 62 abgestützt ist. Aufgrund der Anordnung der Tretlageranordnung 30 mit den Pedalen 36, 38 relativ zu dem Sitz 60 und der Rückenlehne 62 des Fahrrades 2 ist die Tretbewegung nicht wie bei bekannten Fahrrädern im wesentlichen senkrecht nach unten, sondern nach vorne und unten etwa entlang der in Fig. 1 gestrichelt dargestellten Linie 80 gerichtet. Aufgrund dieser Anordnung des Tretlagers 39 relativ zu dem Sitz 60 und der Rückenlehne 62 kann sich der Fahrer des Fahrrades 2 bei der Tretbewegung mit seinem Rücken an der Rückenlehne 62 abstützen, wodurch die Tretbewegung und damit das Fahren des Fahrrades 2 erleichtert und die Ausnutzung der für die Tretbewegung aufzubringenden Kraft verbessert ist.

Die sich hierbei ergebende Sitzposition ist in ergonomischer Hinsicht günstig und vermeidet selbst bei längeren Fahrten zuverlässig, daß beim Fahrer Rückenprobleme auftreten.

Während des Fahrens führen die vordere Rahmenanordnung 6 und die hintere Rahmenanordnung 8 um die Schwenkachse 54 des Schwenklagers 52 relativ zueinander leichte Schwenkbewegungen aus, die durch die Feder 58 und den Stoßdämpfer 56 abgefedert und gedämpft werden. Hierdurch entstehen leichte Vibrationen, die über den Sitz 60 und die Rückenlehne 62 in den Rückenbereich des Fahrers eingeleitet werden. Hierdurch werden eventuell auftretende Fehlstellungen der Wirbel korrigiert, die Muskulatur entlastet und massiert und die Durchblutung, insbesondere im Bereich der Bandscheibe und der Wirbel, verbessert. Auf diese Weise wird Rückenbeschwerden vorgebeugt, oder bereits bestehende Rückenbeschwerden werden gelindert.

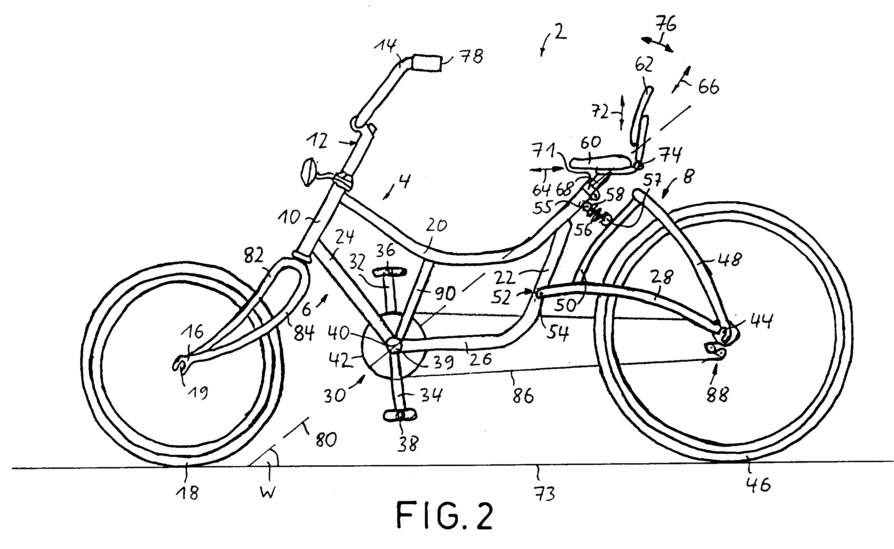

In Fig. 2 ist ein zweites Ausführungsbeispiel des erfindungsgemäßen Fahrrades 2 dargestellt, das sich von dem Ausführungsbeispiel gemäß Fig. 1 im wesentlichen durch die Ausbildung des Vorderradgabelteiles 16 und die Anordnung des Schwenklagers 52 unterscheidet.

Die Arme des Vorderradgabelteiles 16 sind bei diesem Ausführungsbeispiel jeweils durch zwei im Bereich ihrer beiden Enden miteinander verbundene Rohrteile 82, 84 gebildet. Hierdurch ist die Stabilität des Vorderradgabelteiles 16 erhöht.

Das Schwenklager 52 ist bei dem Ausführungsbeispiel gemäß Fig. 2 nicht wie bei dem Ausführungsbeispiel gemäß Fig. 1 in dem Bereich angeordnet, in dem die Rahmenstrebe 22 in die Zwischenstrebe 26 übergeht bzw. mit dieser verbunden ist, sondern nach oben in Richtung auf die Oberstange 20 hin versetzt an der Rahmenstrebe 22. Da bei diesem Ausführungsbeispiel die Schwenkachse 54 des Schwenklagers 52 sich somit nicht auf einer Verbindungslinie zwischen der Drehachse des Tretlagers 39 und der Drehachse 44 des Hinterrades 46 befindet, treten bei Schwenkbewegungen der vorderen Rahmenanordnung 6 relativ zu der hinteren Rahmenanordnung 8 Änderungen der Spannung der Antriebskette 86 auf, die jedoch durch einen am Hinterrad 46 angeordneten Kettenspanner 88 einer Kettenschaltung ausgeglichen werden.

Ferner unterscheidet sich das Ausführungsbeispiel gemäß Fig. 2 von dem Ausführungsbeispiel gemäß Fig. 1 dadurch, daß die Oberstange 20 über eine Verbindungsstrebe 90 mit der Unterstange 24 und der Zwischenstrebe 26 im Bereich der Tretlageranordnung 30 verbunden ist. Der Winkel W beträgt bei diesem Ausführungsbeispiel etwa 39°.

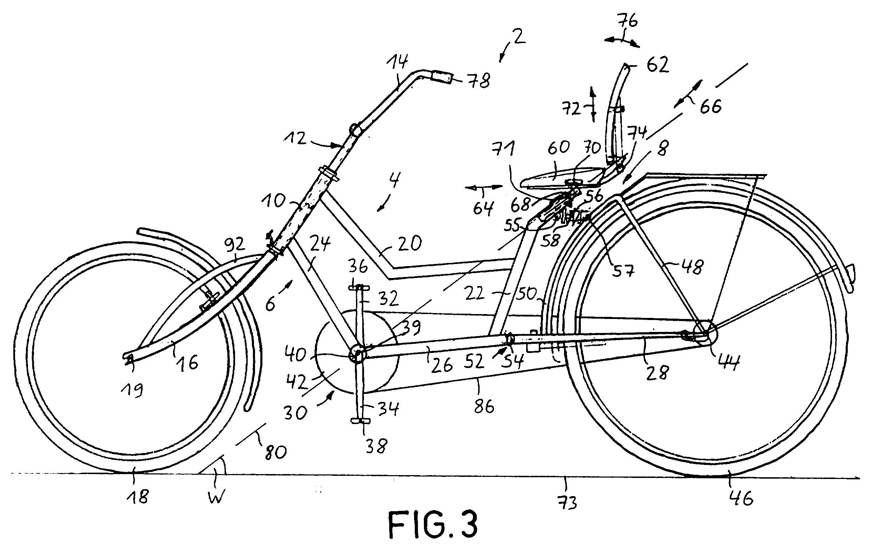

In Fig. 3 ist ein drittes Ausführungsbeispiel des erfindungsgemäßen Fahrrades 2 dargestellt, das sich von dem Ausführungsbeispiel gemäß Fig. 1 im wesentlichen dadurch unterscheidet, daß die Arme des Vorderradgabelteiles 16 jeweils durch ein Rohrteil 92 verstärkt sind, daß die Oberstange 20 zwischen ihren Enden abgewinkelt ausgebildet ist und daß die Zwischenstrebe 26 und die Rahmenstrebe 22 durch separate, miteinander verbundene, beispielsweise verschweißte Teile gebildet sind. Der Winkel W beträgt bei diesem Ausführungsbeispiel etwa 37°.

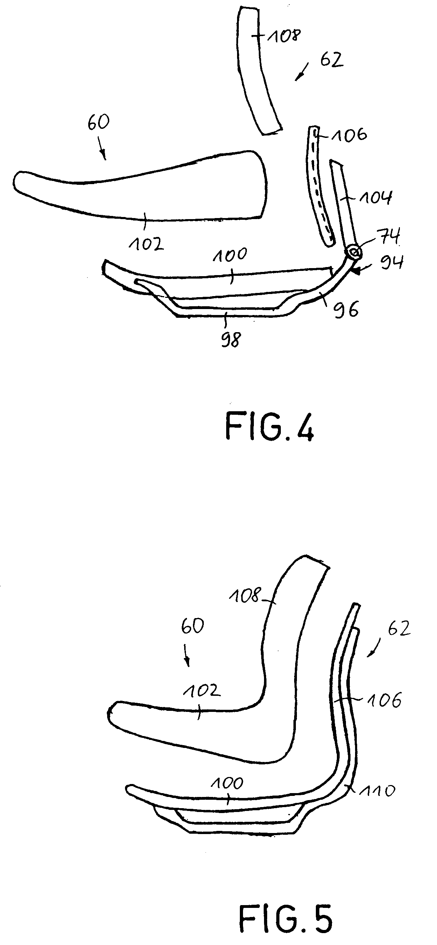

In Fig. 4 ist ein erstes Ausführungsbeispiel des Sitzes 60 mit der Rückenlehne 62 dargestellt. Der Sitz weist eine Halterung 94 mit einem Halteteil 96 auf, das mittels quer zur Längsrichtung des Fahrrades 2 seitlich beabstandeter Schienen 98, in Längsrichtung des Fahrrades 2 verschiebbar mit der Stange 68 (vgl. Fig. 1) verbunden ist. Mit dem Halteteil 96 ist ein Sitzflächenteil 100 verbunden, das die Sitzfläche des Sitzes 60 bildet und mittels einer Sitzflächenpolsterung 102 aus Schaumstoff gepolstert ist. Mit dem Halteteil 96 für das Sitzflächenteil 100 ist um die Achse 74 verschwenkbar ein Halteteil 104 für ein Rückenlehnenteil 106 verbunden, das die Rückenlehne 62 bildet und mittels einer Rückenlehnenpolsterung 108 aus Schaumstoff gepolstert ist. Das Halteteil 104 für das Rückenlehnenteil 106 ist in seiner jeweiligen Verschwenklage relativ zu dem Halteteil 96 arretierbar. Aus der Zeichnung ist nicht erkennbar und deshalb wird hier erläutert, daß die Breite der Rückenlehne 62, also ihre Ausdehnung quer zur Längsrichtung des Fahrrades so gewählt ist, daß die Rückenlehne 62 eine breite Stützfläche zur großflächigen Abstützung des Rückens des Fahrrades bildet. Auf diese Weise ist eine bequeme Abstützung des Rückens des Fahrers erzielt.

In Fig. 5 ist ein zweites Ausführungsbeispiel des Sitzes 60 mit der Rückenlehne 62 dargestellt, daß sich von dem Ausführungsbeispiel gemäß Fig. 4 dadurch unterscheidet, daß das Sitzflächenteil 100 mit dem Rückenlehnenteil 106 einstückig ausgebildet und mit diesem an einem gemeinsamen Halteteil 110 angeordnet ist. Ferner ist die Sitzflächenpolsterung 102 mit der Rückenlehnenpolsterung 108 einstückig ausgebildet.

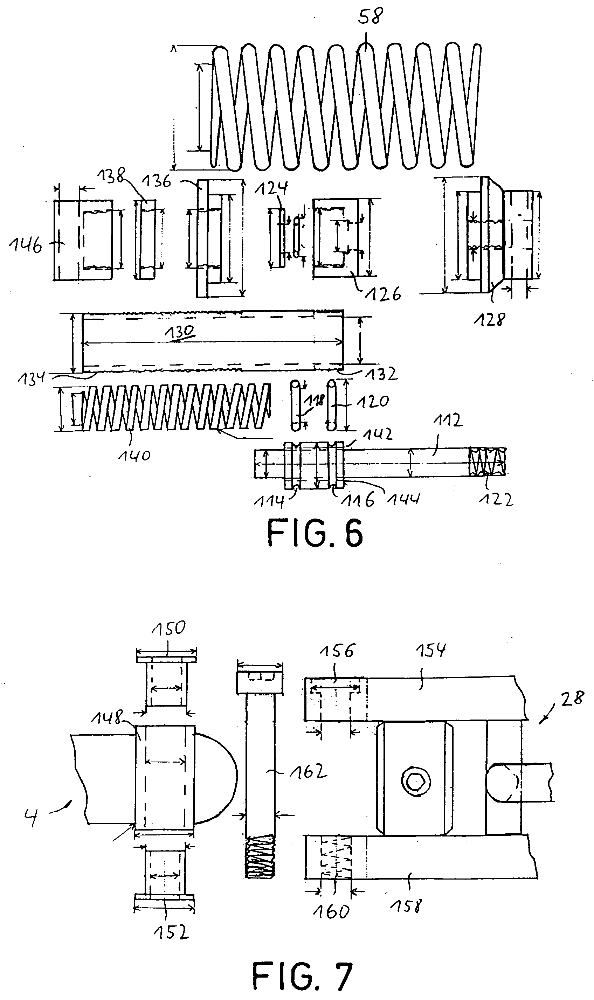

In Fig. 6 sind Bauteile der Feder- und Stoßdämpfungsmittel des Fahrrades 2 dargestellt, die bei dem Ausführungsbeispiel gemäß den Fig. 1 bis 3 durch die Schraubenfeder 58 und den Stoßdämpfer 56 gebildet sind. Der Stoßdämpfer 56 weist einen Stoßdämpferkolben 112 auf, der mit zwei in Längsrichtung des Stoßdämpferkolbens 112 beabstandeten Umfangsnuten 114, 116 zur Aufnahme von Ringdichtungen 118, 120 versehen ist. Zum Zusammenbau des Stoßdämpfers 56 wird von der Gewindeseite 122 des Stoßdämpferkolbens 112 zunächst eine Dichtungsscheibe 124, dann die Ringdichtungen 118, 120 und ein Deckel 126 aufgesetzt. Dann wird ein erster Federsattel 128 mit einem selbsthemmenden Gewinde auf die Gewindeseite 122 des Stoßdämpferkolbens 112 aufgeschraubt. Dann wird der Stoßdämpferkolben 112 in ein Zylinderrohr 130 eingesetzt, das an seinem einen Ende ein kürzeres Gewinde 132 und seinem anderen Ende ein längeres Gewinde 134 aufweist. Der Stoßdämpferkolben 112 wird von der das kürzere Gewinde 132 aufweisenden Seite in das Zylinderrohr 130 eingesetzt, wobei der Deckel 126 mit dem kürzeren Gewinde 132 verschraubt wird. Von der Seite des Zylinderrohres 130 mit dem längeren Gewinde 134 wird dann die Schraubenfeder 58, die die Federmittel des Fahrrades 2 bildet, zusammen mit einem zweiten Federsattel 136 aufgesetzt. Die Vorspannung der Schraubenfeder 58 ist mittels einer auf das Gewinde 134 aufschraubbaren Mutter 138 einstellbar.

Weiterhin wird eine innere Schraubenfeder 140 in das Zylinderrohr 130 eingesetzt. Die Funktion der inneren Schraubenfeder 140 besteht einerseits in einer Federung, andererseits in einem Volumenausgleich beim Eintauchen des Stoßdämpferkolbens 112 in das Zylinderrohr 130. Der Stoßdämpferkolben 112 weist zwei durchgehende Löcher 142, 144 auf. Schließlich wird das Zylinderrohr mit Öl gefüllt und ein Schließdeckel 146 aufgeschraubt.

In Fig. 7 sind Bauteile eines Ausführungsbeispieles des Schwenklagers 54 dargestellt. Bei diesem Ausführungsbeispiel weist das Schwenklager 54 ein mit dem Rahmen, beispielsweise der Zwischenstrebe 26 und/oder der Rahmenstrebe 22, verschweißtes Rohrteil 148 auf, in das von beiden Seiten Lagerteile 150, 152 aus Kunststoff eingesetzt sind. Das Hinterradgabelteil 28 weist an seinem dem Hinterrad 46 abgewandten Ende an seinem einen Arm 154 eine Durchgangsbohrung 156 und an seinem anderen Arm 158 zu der Durchgangsbohrung 156 koaxial eine Gewindebohrung 160 mit selbsthemmendem Gewinde auf. Im zusammengebauten Zustand des Schwenklagers durchsetzt ein Lagerbolzen 162 die Durchgangsbohrung 156, die Lagerteile 150, 152 und das Rohrteil 148 und ist in die Gewindebohrung 160 des Armes 158 des Hinterradgabelteiles 28 eingeschraubt, so daß das Hinterradgabelteil um den Lagerbolzen 162 als Schwenkachse 54 schwenkbar mit der vorderen Rahmenanordnung 4 des Fahrrades 2 verbunden ist.

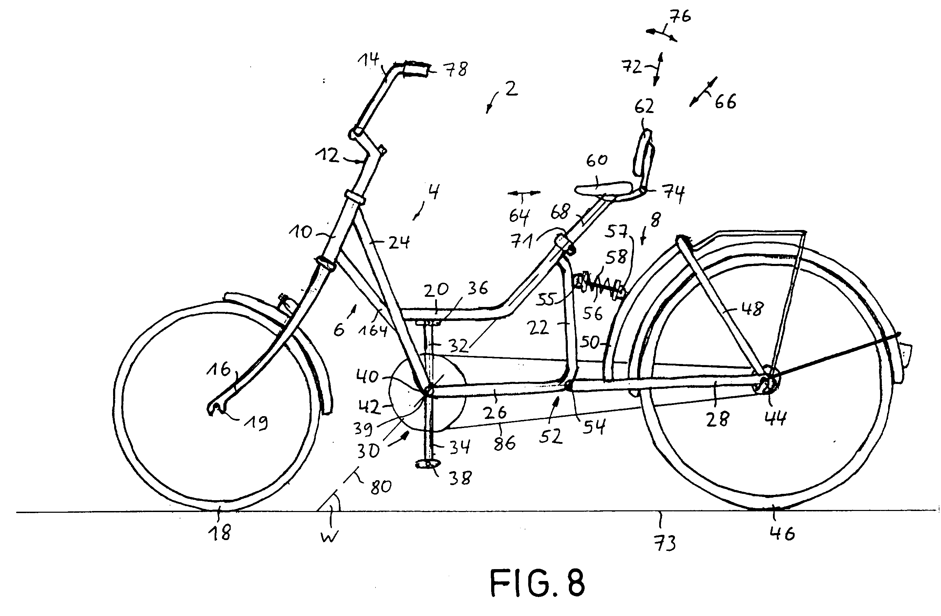

In Fig. 8 ist ein viertes Ausführungsbeispiel des erfindungsgemäßen Fahrrades 2 dargestellt, das sich von dem Ausführungsbeispiel gemäß Fig. 1 im wesentlichen dadurch unterscheidet, daß die Oberstange 20 nicht mit dem Lenkkopf 10, sondern mit der Unterstange 24 verbunden ist, und zwar in Längsrichtung der Unterstange 24 etwa in deren Mitte. Ferner ist die Unterstange 24 über eine weitere Verbindungsstrebe 164 mit dem Lenkkopf 10 verbunden. Der Winkel W beträgt bei diesem Ausführungsbeispiel etwa 48°.

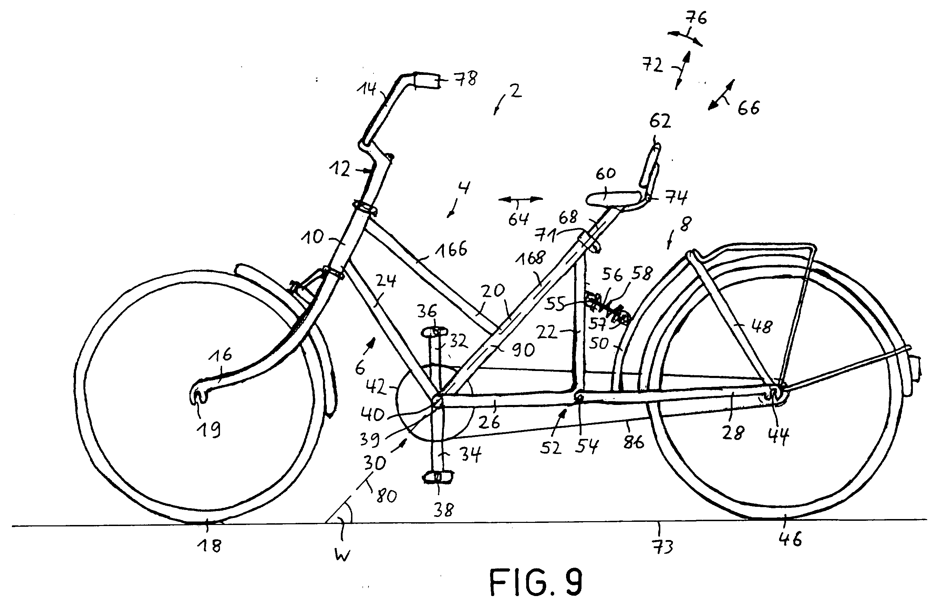

In Fig. 9 ist ein fünftes Ausführungsbeispiel des erfindungsgemäßen Fahrrades 2 dargestellt, das sich von dem Ausführungsbeispiel gemäß Fig. 1 im wesentlichen dadurch unterscheidet, daß die Oberstange 20 durch zwei miteinander verbundene Stangen 166, 168 gebildet ist, von denen die Stange 168 mit der Verbindungsstrebe 90 einstückig geformt ist, über die die Oberstange 20 im Bereich der Tretlageranordnung 30 mit der Zwischenstrebe 26 verbunden ist. Der Winkel W beträgt bei diesem Ausführungsbeispiel etwa 47°.

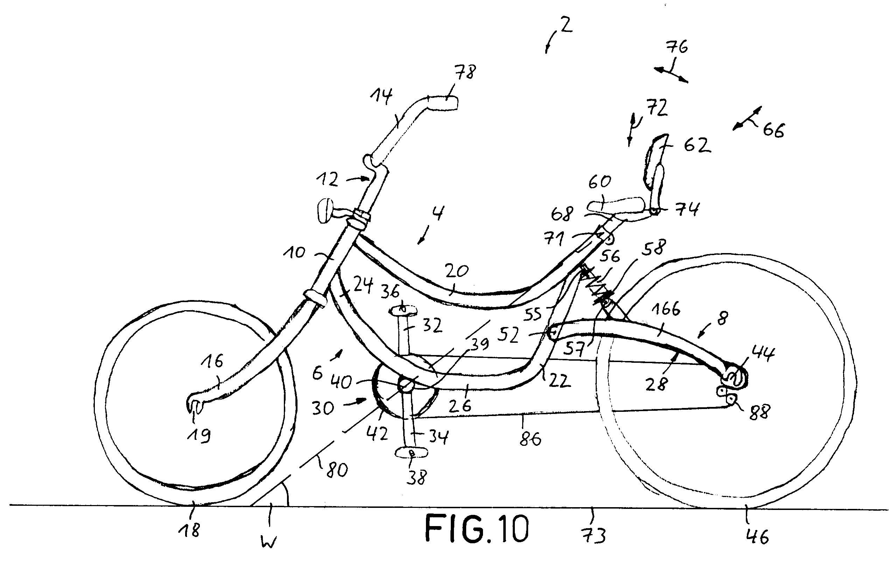

In Fig. 10 ist ein sechstes Ausführungsbeispiel des erfindungsgemäßen Fahrrades 2 dargestellt. Dieses Ausführungsbeispiel unterscheidet sich von dem in Fig. 2 dargestellten Ausführungsbeispiel im wesentlichen dadurch, daß die Verbindungsstrebe 90 weggelassen ist und daß die hintere Rahmenanordnung 8 lediglich durch zwei seitlich zueinander beabstandete Rohrteile gebildet ist, von denen in Fig. 10 nur ein Rohrteil 166 erkennbar ist, das mit dem anderen Rohrteil das Hinterradgabelteil 28 bildet. Der Stoßdämpfer 56 ist mit den Rohrteilen 166 verbunden. Durch die einfachere Ausbildung der hinteren Rahmenanordnung 8 ist der Aufbau dieses Ausführungsbeispiels besonders einfach gestaltet. Der Winkel W beträgt etwa 38°.

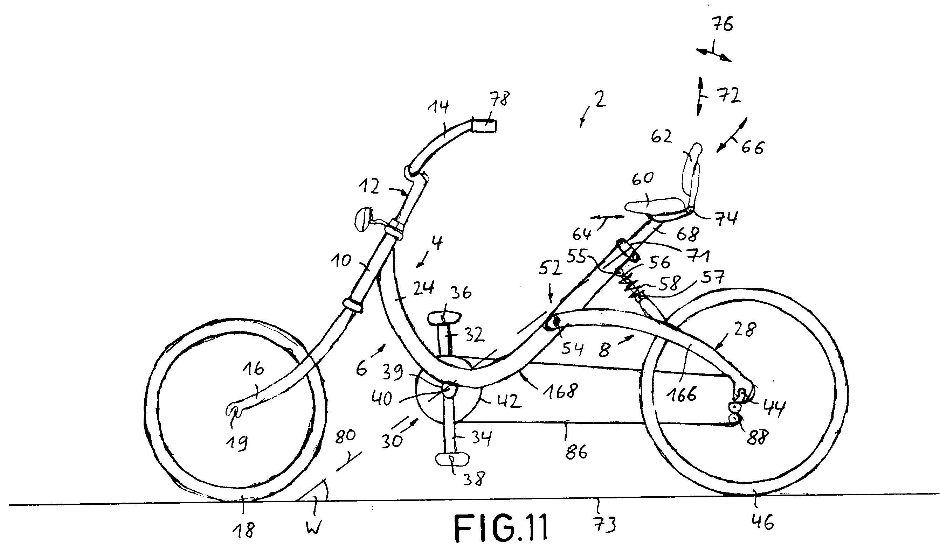

In Fig. 11 ist ein siebtes Ausführungsbeispiel des erfindungsgemäßen Fahrrades 2 dargestellt, das sich von dem Ausführungsbeispiel gemäß Fig. 10 im wesentlichen dadurch unterscheidet, daß die vordere Rahmenanordnung 6 lediglich durch eine einzelne Stange 168 gebildet ist, deren dem Lenkkopf 10 zugewandtes Ende die Unterstange 24 bildet und in deren dem Lenkkopf 10 abgewandten Ende der Sitz 60 mit der Stange 68 gehalten ist. Das Schwenklager 52 ist zwischen den Enden der Stange 168 im Bereich des dem Lenkkopf 10 abgewandten Endes der Stange 168 angeordnet. Der Winkel W beträgt bei diesem Ausführungsbeispiel etwa 36°. Dadurch, daß die vordere Rahmenanordnung 4 nur aus einer einzigen Stange 168 besteht, ist der Aufbau des Fahrrades 2 weiter vereinfacht, wobei durch entsprechende Dimensionierung der Stange 168 eine ausreichende Stabilität erzielt ist.

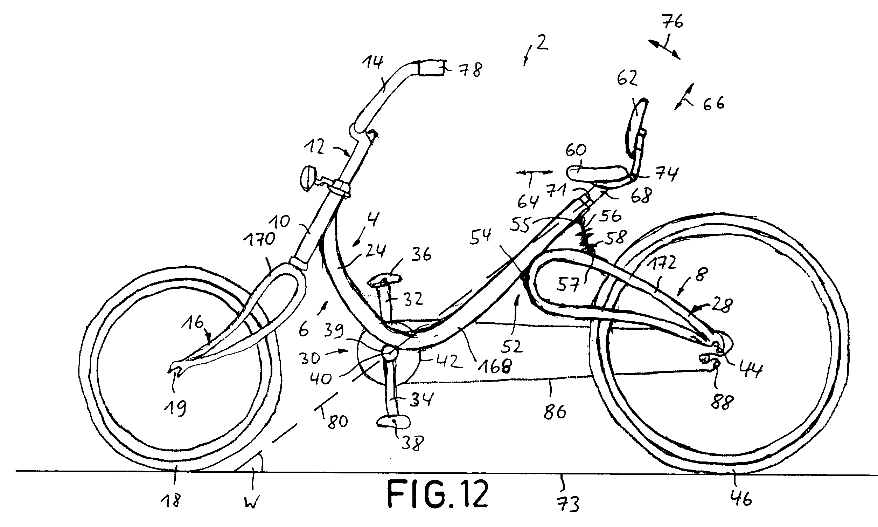

In Fig. 12 ist ein achtes Ausführungsbeispiel des erfindungsgemäßen Fahrrades 2 dargestellt, das sich von dem Ausführungsbeispiel gemäß Fig. 11 im wesentlichen dadurch unterscheidet, daß das Vorderradgabelteil 16 aus zwei seitlich zueinander beabstandeten Schwingenteilen, von denen in Fig. 12 nur ein Schwingenteil 170 erkennbar ist und das Hinterradgabelteil 28 aus zwei Schwingenteilen, von denen in Fig. 12 nur ein Schwingenteil 172 erkennbar ist, gebildet ist. Der Winkel W beträgt bei diesem Ausführungsbeispiel etwa 38°.

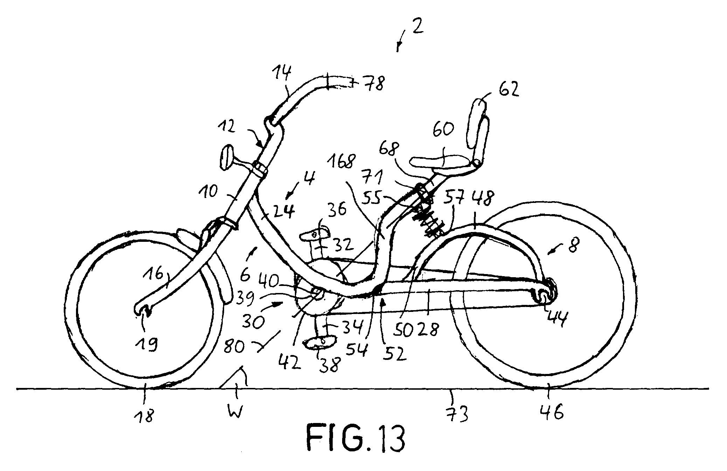

In Fig. 13 ist ein neuntes Ausführungsbeispiel des erfindungsgemäßen Fahrrades 2 dargestellt. Von dem Ausführungsbeispiel gemäß Fig. 11 unterscheidet sich das Ausführungsbeispiel gemäß Fig. 13 im wesentlichen dadurch, daß sich die Schwenkachse 54 des Schwenklagers 52 bei Betrieb des Fahrrades auf einer Verbindungslinie zwischen der Drehachse 40 des Tretlagers der Tretlageranordnung 30 und der Drehachse 44 des Hinterrades befindet. Ferner sind bei der hinteren Rahmenanordnung 8 jeweils die Hinterradstrebe 48 und die Verbindungsstrebe 50 einstückig miteinander ausgebildet. Weiterhin ist die Stange 168 an ihrem dem Lenkkopf abgewandten Ende 10 zum Hinterrad 46 hin abgebogen. Der Winkel W beträgt bei diesem Ausführungsbeispiel etwa 44°.

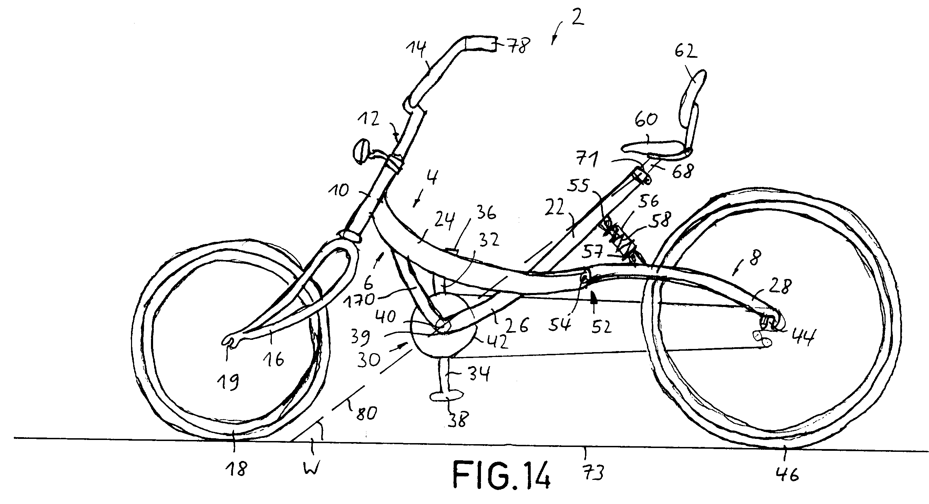

In Fig. 14 ist ein zehntes Ausführungsbeispiel des erfindungsgemäßen Fahrrades 2 dargestellt, das sich von dem Ausführungsbeispiel gemäß Fig. 11 im wesentlichen dadurch unterscheidet, daß eine Rahmenstrebe 22 vorgesehen ist, die an ihrem dem Sitz 60 abgewandten Ende mit der Unterstange 24 verbunden ist, und daß die Unterstange 24 einen von der Unterstange 24 abzweigenden Stangenteil 170 aufweist. Der Stangenteil 170 ist mit seinem dem Lenkkopf 10 abgewandten Ende mit der Zwischenstrebe 26 verbunden, die an ihrem dem Stangenteil 170 abgewandten Ende mit der Unterstange 24 in dem Bereich verbunden ist, in dem die Unterstange 24 mit der Rahmenstrebe 22 verbunden ist. Die Tretlageranordnung 30 ist im Bereich des dem Stangenteil 170 der Unterstange 24 zugewandten Endes der Zwischenstrebe 26 angeordnet. Der Winkel W beträgt bei diesem Ausführungsbeispiel etwa 38°.

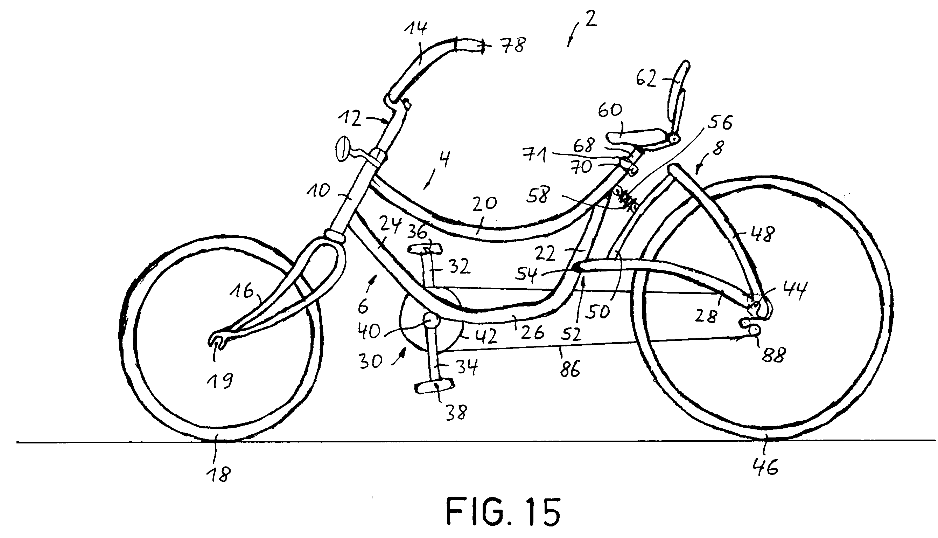

Schließlich ist in Fig. 15 ein elftes Ausführungsbeispiel des erfindungsgemäßen Fahrrades 2 dargestellt, das sich von dem Ausführungsbeispiel gemäß Fig. 1 zunächst dadurch unterscheidet, daß die Tretlageranordnung 30 mit der Unterseite der Unterstange 24 verbunden ist. Außerdem ist die Gabellänge des Vorderradgabelteiles 16 so bemessen und das Vorderradgabelteil 16 so geformt, daß sich das Vorderradgabelteil 16 um die Lenkachse des Fahrrades um etwa 180° nach hinten klappen läßt, so daß das Vorderrad 18 dann unterhalb der Unterstange 24 der vorderen Rahmenanordnung 6 aufgenommen ist. Auf diese Weise ist das Fahrrad 2 kompakt zusammenklappbar. Dies erleichtert den Transport.

## Patentansprüche

1. Fahrrad,
mit einem Rahmen, der eine vordere Rahmenanordnung, an der ein Vorderrad angeordnet ist, und eine hintere Rahmenanordnung, an der wenigstens ein Hinterrad angeordnet ist, aufweist,
mit einer an dem Rahmen angeordneten Tretlageranordnung,
**dadurch gekennzeichnet**,
daß sich die Drehachse der Tretlageranordnung (30) näher an der Drehachse des Vorderrades (18) als an der Drehachse des Hinterrades (46) befindet.

2. Fahrrad nach Anspruch 1, **dadurch gekennzeichnet**, daß die Tretlageranordnung (30) relativ zu einer mit dem Rahmen (4) verbundenen Sitzeinrichtung des Fahrrades (2) derart angeordnet ist, daß eine von dem Verbindungspunkt der Sitzeinrichtung mit dem Rahmen (4) zu der Drehachse der Tretlageranordnung (30) verlaufende gedachte Linie (80) mit der Horizontalen einen Winkel (W) von etwa 35° bis etwa 55°, vorzugsweise etwa 42° bis etwa 48°, insbesondere etwa 45°, bildet.

3. Fahrrad nach Anspruch 1 oder 2, **dadurch gekennzeichnet**, daß die vordere Rahmenanordnung (6) einen Lenkkopf (10), in dem eine Lenkeranordnung (12) gelagert ist, die mit einem Vorderradgabelteil (16) zur Aufnahme des Vorderrades (18) verbunden ist, und eine Oberstange (20), die mit dem Lenkkopf (10) oder einer Unterstange (24) und über eine Rahmenstrebe (22) mit einem Hinterradgabelteil (28) der hinteren Rahmenanordnung (8) zur Aufnahme des Hinterrades (46) verbunden ist, aufweist, daß die Tretlageranordnung (30) über die Unterstange (24) mit dem Lenkkopf (10) verbunden ist, daß die Unterstange (24) oder die Tretlageranordnung (30) über eine Zwischenstrebe (26) mit der Rahmenstrebe (22) verbunden ist und daß die Tretlageranordnung (30) im Bereich des der Unterstange (24) zugewandten Endes der Zwischenstrebe (26) angeordnet ist.

4. Fahrrad nach Anspruch 3, **dadurch gekennzeichnet,** daß die Zwischenstrebe (26) mit der Rahmenstrebe (22) und/oder der Unterstange (24) einstückig ausgebildet ist.

5. Fahrrad nach einem der vorhergehenden Ansprüche, **dadurch gekennzeichnet,** daß die vordere Rahmenanordnung (6) um eine zu den Drehachsen (19, 44) von Vorder- und Hinterrad (18, 46) parallele Schwenkachse (54) schwenkbar mit der hinteren Rahmenanordnung (8) verbunden ist und daß zwischen der vorderen Rahmenanordnung (6) und der hinteren Rahmenanordnung (8) entfernt von der Schwenkachse (54) Feder- und/oder Stoßdämpfungsmittel angeordnet sind.

6. Fahrrad nach einem der vorhergehenden Ansprüche, **dadurch gekennzeichnet,** daß die hintere Rahmenanordnung (8) zwei seitliche Hinterradstreben (48) aufweist, deren eines Ende jeweils mit dem Hinterradgabelteil (28) und deren anderes Ende jeweils mit einem Ende einer Verbindungsstrebe (50) verbunden ist, deren anderes Ende mit dem Hinterradgabelteil (28) verbunden ist.

7. Fahrrad nach Anspruch 5 oder 6, **dadurch gekennzeichnet,** daß zur schwenkbaren Verbindung von vorderer Rahmenanordnung (6) und hinterer Rahmenanordnung (8) das Hinterradgabelteil (28) oder ein damit verbundenes Teil über ein Schwenklager (52) mit der vorderen Rahmenanordnung (6), vorzugsweise mit der Rahmenstrebe (22) oder der Zwischenstrebe (26), schwenkbar verbunden ist.

8. Fahrrad nach Anspruch 7, **dadurch gekennzeichnet,** daß sich die Schwenkachse (54) des Schwenklagers (52) bei Betrieb des Fahrrades (2) auf einer Verbindungslinie zwischen der Drehachse (40) des Tretlagers (39) und der Drehachse (44) des Hinterrades (46) befindet.

9. Fahrrad nach einem der Ansprüche 5 bis 8, **dadurch gekennzeichnet,** daß die Stoßdämpfungsmittel wenigstens einen Stoßdämpfer (56) aufweisen, dessen eines Ende gelenkig mit der vorderen Rahmenanordnung (6) und dessen anderes Ende gelenkig mit der hinteren Rahmenanordnung (8) verbunden ist.

10. Fahrrad nach einem der Ansprüche 5 bis 9, **dadurch gekennzeichnet,** daß die Federmittel wenigstens eine Druckfeder, insbesondere eine Schraubenfeder (58), aufweisen.

11. Fahrrad nach einem der vorhergehenden Ansprüche, **dadurch gekennzeichnet,** daß die Tretlageranordnung (30) in Längsrichtung des Fahrrades (2) etwa unterhalb der Lenkeranordnung (12) angeordnet ist.

12. Fahrrad nach einem der vorhergehenden Ansprüche, **dadurch gekennzeichnet,** daß die Sitzeinrichtung des Fahrrades (2) einen Sitz (60) mit einer Rückenlehne (62) aufweist.

13. Fahrrad nach Anspruch 12, **dadurch gekennzeichnet,** daß der Sitz (60) in Längsrichtung des Fahrrades (2) und/oder in seiner Höhe und/oder in seiner Neigung und/oder die Rückenlehne (62) des Sitzes (60) in ihrer Neigung und/oder ihrer Höhe verstellbar und in der jeweiligen Verstellage arretierbar ist.

14. Fahrrad nach einem der vorhergehenden Ansprüche, **dadurch gekennzeichnet,** daß die Lenkeranordnung (12) eine Lenkstange (14) zum Lenken des Fahrrads (2) aufweist, deren freie Enden (78) sich in Längsrichtung des Fahrrads (2) etwa bis in den Bereich der Zwischenstrebe (26) erstrecken.

15. Fahrrad nach einem der vorhergehenden Ansprüche, **dadurch gekennzeichnet,** daß die Oberstange (20) zwischen ihren Enden nach unten hin gebogen oder abgewinkelt ist.

16. Fahrrad nach einem der vorhergehenden Ansprüche, **dadurch gekennzeichnet,** daß der Durchmesser des Vorderrades (18) kleiner als der Durchmesser des Hinterrades (46) ist.

17. Fahrrad nach einem der vorhergehenden Ansprüche, **dadurch gekennzeichnet**, daß sich die Zwischenstrebe (26) im wesentlichen in Richtung des Hinterradgabelteiles (28) erstreckt.

18. Fahrrad nach einem der Ansprüche 12 bis 17, **dadurch gekennzeichnet,** daß der Sitz (60) mit der Rückenlehne (62) einstückig ausgebildet ist.

19. Fahrrad nach einem der Ansprüche 12 bis 18, **dadurch gekennzeichnet**, daß die Rückenlehne (62) eine breite Stützfläche zur großflächigen Abstützung des Rückens des Fahrers bildet.

20. Fahrrad nach einem der Ansprüche 12 bis 19, **dadurch gekennzeichnet**, daß die Breite des Sitzes (60) wenigstens im Bereich seines der Rückenlehne (62) zugewandten Endes im wesentlichen der Breite dieses Endes der Rückenlehne (62) entspricht.

21. Fahrrad nach einem der vorhergehenden Ansprüche, **dadurch gekennzeichnet**, daß die Oberstange (20) über eine Verbindungsstrebe (90) mit der Unterstange (24) und/oder der Zwischenstrebe (26) verbunden ist.
